# EUROPÄISCHE PATENTSCHRIFT

(11) **EP 1 537 345 B1**
(45) Veröffentlichungstag und Bekanntmachung des Hinweises auf die Patenterteilung: **26.10.2011**
(21) Anmeldenummer: 03807790.5
(22) Anmeldetag: 13.08.2003
(51) Int. Cl.: F16H 25/22

(54) **KUGELGEWINDETRIEB**
BALL SCREW
VIS A BILLES

(30) Priorität: 12.09.2002 DE 10242297
(43) Veröffentlichungstag der Anmeldung: 08.06.2005
(73) Patentinhaber: Schaeffler Technologies GmbH & Co. KG, 91074 Herzogenaurach (DE)
(72) Erfinder: OSTERLÄNGER, Jürgen, 91448 Emskirchen (DE); MAYER, Ralf, 91074 Herzogenaurach (DE)
(86) Internationale Anmeldenummer: PCT/EP2003/008965
(87) Internationale Veröffentlichungsnummer: WO 2004/033935

(56) Entgegenhaltungen:
- US-A- 2 581 482
- US-A- 3 006 212
- US-A- 5 005 436
- US-A- 5 555 770
- US-A1- 2001 000 051
- PATENT ABSTRACTS OF JAPAN vol. 2003, no. 10, 8. Oktober 2003 (2003-10-08) & JP 2003 172422 A (SHANGYIN SCI & TECHNOL CO LTD), 20. Juni 2003 (2003-06-20)

## Beschreibung

### Gebiet der Erfindung

Die vorliegende Erfindung betrifft einen Kugelgewindetrieb.

Aus der gattungsgemäßen DE 199 44 875 A1 beispielsweise ist ein Kugelgewindetrieb bekannt, mit einer Spindel und einer diese umgebenden Mutter, sowie mit dazwischen angeordneten Kugeln, welche in einer an der äußeren Oberfläche der Spindel ausgebildeten Gewindenut und in einer entsprechenden, an der inneren Oberfläche der Mutter ausgebildeten Gewindenut abrollbar angeordnet sind. Ferner sind radiale Durchgangsöffnungen an der Mutter vorgesehen, in welche Umlenkstücke für die Rückführung der Kugeln jeweils von einem Auslaufende einer gemeinsamen Windung der Gewindenuten zu einem Einlaufende dieser Windung eingesetzt sind. Die Mutter ist als einstückige Hülse mit einem kreiszylindrischen Mantel ausgeführt und jedes eingesetzte Umlenkstück ist in der zugehörigen Durchgangsöffnung der Mutter vollständig innerhalb des Außenmantels angeordnet. Die Umlenkstücke sind im Querschnitt gesehen etwa U-förmig ausgebildet und weisen einen Boden und zwei an den Boden anschließende Seitenborde auf. Zwischen diesen Seitenborden ist ein Umlenkkanal oder eine Umlenknut für die Rückführung der Kugeln ausgebildet. Die Umlenkstücke können beispielsweise aus Kunststoff im Spritzverfahren hergestellt werden. Den Umlenkstücken kann eine räumlich komplizierte Form gegeben werden, die ein einwandfreies Umlenken der Kugeln unterstützen soll. Die Formgebung der Umlenkstücke unterliegt allerdings Grenzen. Denn wenn beispielsweise das Umlenkstück im Spritzverfahren aus Kunststoff hergestellt werden soll, ist nicht jede beliebige Formgebung möglich. Denn bei räumlich sehr komplizierten Formgebungen kann es beispielsweise wegen Hinterschneidungen zu Problemen beim Öffnen des Spritzwerkzeugs kommen. Oder es werden sehr aufwendige Schieberwerkzeuge erforderlich, die die Herstellungskosten für derartige Umlenkstücke derart verteuern, dass ihr Einsatz aus betriebswirtschaftlicher Sicht problematisch ist.

Aus US 5,005,436 A ist ein Kugelgewindetrieb mit Außenumlenkung bekannt geworden. Ein am Außenumfang der Spindelmutter angeordnetes Umlenkstück übergreift mehrere Windungen der schraubenförmigen Gewindebahn. An seinen beiden Enden ist das Umlenkstück mit abgewinkelten Stutzen versehen, die jeweils in eine Bohrung der Spindelmutter eingreifen und die Wanddicke der Spindelmutter durchdringen. Das Umlenkstück bildet einen Umlenkkanal für die Kugeln, die von einem Auslaufende der - mehrere Windungen umfassenden - Gewindebahn über den Umlenkkanal zum Einlaufende der Gewindebahn umgelenkt werden. Die beiden Stutzen des Umlenkstücks schließen an das Einlaufende und das Auslaufende der schraubenförmigen Gewindebahn an. Bei diesem Kugelgewindetrieb kann das Umlenkstück mehrteilig ausgeführt sein.

Aufgabe der vorliegenden Erfindung ist es, einen Kugelgewindetrieb nach den Merkmalen des Oberbegriffs des Anspruchs 1 anzugeben, bei dem das Umlenkstück auf einfache Art und Weise hergestellt werden kann.

Erfindungsgemäß wird diese Aufgabe durch den Kugelgewindetreib gemäß Anspruch 1 gelöst.

Bei dem erfindungsgemäßen Kugelgewindetrieb können komplizierte Formgebungen des Umlenkstücks erfolgen, ohne das aufwendige Spritzwerkzeuge erforderlich wären. Selbst komplizierte räumliche Formgebungen, die bei der Herstellung bekannter einteiliger Umlenkstücke ausgeprägte Hinterschneidungen bedingen und somit aufwendige Schieberwerkzeuge erfordern, sind möglich. Die beiden Teilumlenkstücke können in einem Arbeitsgang in einem gemeinsamen Spritzwerkzeug gegossen werden. Aufwendige Hinterschneidungen oder komplizierte Schieberwerkzeuge können entfallen. Die beiden Teilumlenkstücke brauchen lediglich zusammengefügt werden und bilden dann das Umlenkstück.

Bei der üblichen Einzelumlenkung sind in der Spindelmutter mehrere in sich geschlossene Kugelreihen vorgesehen, die sich jeweils über eine Windung erstrecken. In diesem Fall übergreift das Umlenkstücke diese eine Windung. Normalerweise sind Einzelumlenkungen auch deshalb üblich, weil nur so die in den jeweiligen Kugelreihen wirksamen Kräfte aufgrund des Umlenkvorgangs unterhalb eines kritischen Wertes bleiben. Oberhalb des kritischen Wertes kann es zu unerwünschten Laufgeräuschen oder Betriebsstörungen wegen Verhakelns der Kugeln kommen.

Mit der Erfindung hingegen können die Kugelführungsflächen an den Umlenkstücken derart ausgebildet sein, dass das Abheben der Kugeln aus der Gewindenut der Spindel sanft und mit geringen Kräften erfolgt.

Erfindungsgemäß ist der eine Seitenbord an dem einem Teilumlenkstück einstückig angeformt und der andere Seitenbord an dem anderen Umlenkstück einstückig angeformt, wobei die zwei Seitenborde und der Boden den Kugelkanal begrenzen.

Das eine Teilumlenkstück kann dann einen Teil des Bodens und das andere Teilumlenkstück kann einen anderen Teil des Bodens aufweisen, wobei beide Teile des Bodens sich zu dem vollständigen Boden des Umlenkkanals des Umlenkstücks ergänzen können.

In besonders günstiger Weise können die beiden Teilumlenkstücke insbesondere durch ein Filmscharnier unverlierbar miteinander verbunden sein. Auf diese Weise entfällt eine aufwendige Zusortierung von zueinander passenden Teilumlenkstücken. Wenn ein Filmscharnier vorgesehen werden soll, kann dieses in einem Arbeitsgang mit der Herstellung der Teilumlenkstücke vorgesehen werden. Das Filmscharnier ist dann vorzugsweise einstückig mit beiden Teilumlenkstücken verbunden. In diesem Fall ist eine Ausrichtung der beiden Teilumlenkstücke zueinander bereits einwandfrei gegeben. Die beiden Teilumlenkstücke brauchen dann lediglich zusammengeklappt werden, wobei das Filmscharnier einen Klappwinkel von 180° ermöglicht, so dass das eine Teilumlenkstück beispielsweise um 180° geklappt werden kann, bis es auf das andere Teilumlenkstück passt. Für eine einfache Herstellung und auch für eine einfache Montage der Umlenkstücke kann es zweckmäßig sein, dass die beiden Teilumlenkstücke in einer quer zur Teilungsebene angeordneten Schnittebene punktsymmetrisch zu einem in der Teilungsebene liegenden Symmetriepunkt ausgebildet sind. Aufgrund dieser Symmetrie kann ein besonderes Orientieren und Einbauen der Umlenkstücke in die Spindelmutter entfallen.

Beide Seitenborde des Umlenkstückes können jeweils an ihrem der Gewindenut der Spindel zugewandten freien Ende mit einer Schaufel zum Eingriff zwischen die Kugel und die Gewindenut der Gewindespindel versehen sein, so dass die wirksamen Kräfte während des Umlenkens der Kugeln reduziert sind. Die Schaufeln können am fertigen Umlenkstück räumlich anspruchsvolle Konturen aufweisen. Der lichte Abstand zwischen den beiden freien Enden der Seitenborde ist deutlich kleiner als der Kugeldurchmesser ausgeführt. Schwierigkeiten beim Spritzgießen entfallen, da ja die Teilungsebene durch den Umlenkkanal läuft und somit die beiden Teilumlenkstücke auch mit einfachen Spritzwerkzeugen herstellbar sind.

Die zweiteilige Ausführung des Umlenkstücks ermöglicht auch die Ausbildung von Kugelführungsflächen an dem Umlenkstück, die in die Gewindenut der Spindel eingreifen, um die Kugeln von der Gewindenut der Spindel abzuheben. Die weiter oben erwähnten Schaufeln oder auch die Kugelführungsflächen lassen sich bei bekannten Umlenkstücken nicht oder nur in extrem aufwendiger Weise herstellen, da die Formgebung anspruchsvolle Werkzeuge erfordert.

Beide Teilumlenkstücke können jeweils mit einem Haken und mit einer Hakenaufnahme versehen sein, wobei je ein Haken und eine Hakenaufnahme beider Teilumlenkstücke ineinander greifend miteinander verhakbar sind. Diese Haken und Hakenaufnahmen können insbesondere einstückig an die Teilumlenkstücke angeformt sein und bereits im Spritzwerkzeug berücksichtigt werden. Die beiden Teilumlenkstücke brauchen dann lediglich zusammengeklappt werden, wobei die jeweiligen Haken und Hakenaufnahmen ineinander haken bzw. miteinander verrasten. Die Umlenkstücke sind dann einbaufertig und können auch nicht mehr ohne äußeren Eingriff voneinander getrennt werden.

Vorzugsweise sind an dem einen umfangsseitigen Ende jedes Teilumlenkstükkes der Haken und an dem gegenüberliegenden anderen umfangsseitigen Ende die Hakenaufnahme vorgesehen. Diese Ausbildung eignet sich insbesondere für erfindungsgemäße Teilumlenkstücke, die in der oben beschriebenen Weise punktsymmetrsich zueinander sind. In diesem Fall können die beiden Teilumlenkstücke auch mit den daran ausgebildeten Haken und Hakenaufnahmen identisch ausgebildet sein.

Vorzugsweise ist das Umlenkstück aus thermoplastischen Kunststoff im Spritzgießverfahren hergestellt.

Nachstehend wird die Erfindung anhand eines in insgesamt neun Figuren dargestellten Ausführungsbeispieles näher erläutert. Es zeigen:
- Figur 1: ein erfindungsgemäßes Umlenkstück .in perspektivischer Darstellung,
- Figur 2: das erfindungsgemäße Umlenkstück gemäß Figur 1 zusammengeklappt,
- Figur 3: das erfindungsgemäße Umlenkstück in einer Ansicht,
- Figur 4: einen Schnitt durch das erfindungsgemäße Umlenkstück aus Figur 3 entlang der Linie IV-IV,
- Figur 5: eine Ansicht zu der perspektivischen Darstellung des erfindungsgemäßen Umlenkstücks gemäß Figur 1,
- Figur 6: eine weitere Ansicht zu der perspektivischen Darstellung gemäß Figur 1,
- Figur 7: einen Schnitt entlang der Linie VII-VII in Figur 6,
- Figur 8: ein Detail des erfindungsgemäßen Umlenkstückes und
- Figur 9: eine schematische Darstellung eines erfindungsgemäßen Kugelgewindetriebes.

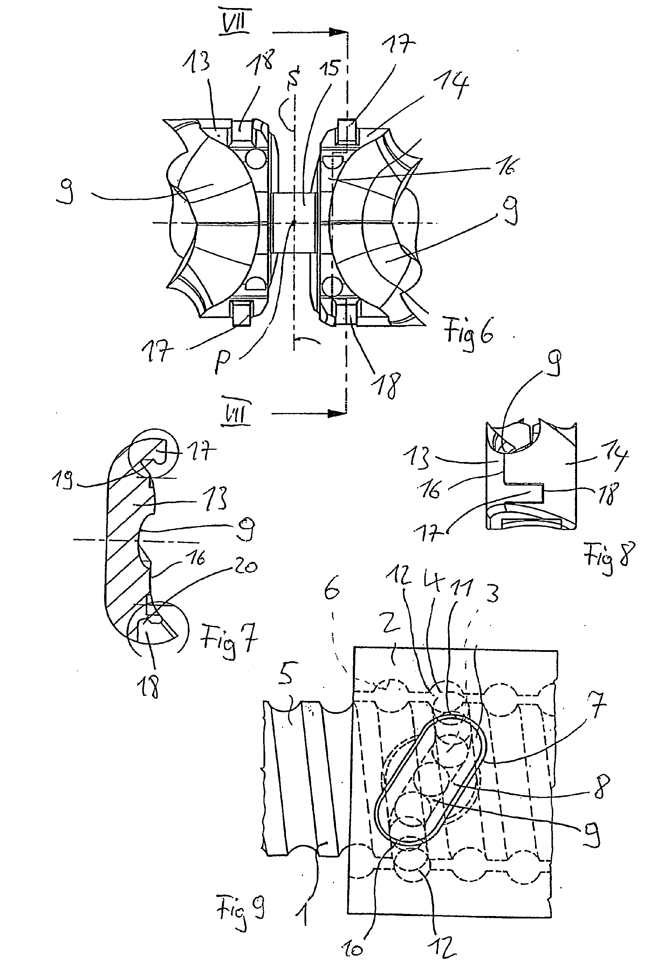

Der in Figur 9 abgebildete erfindungsgemäße Kugelgewindetrieb umfasst eine auf einer Spindel 1 angeordnete Spindelmutter 2, sowie Kugeln 3, die hier lediglich gestrichelt dargestellt sind. Die Kugeln 3 können an einer Gewindebahn 4 abrollen. Die Gewindebahn 4 umfasst eine an der Spindel 1 ausgebildete Gewindenut 5 und eine an der Spindelmutter 2 ausgebildete Gewindenut 6. Die Spindelmutter 1 ist mit mehreren über den Umfang verteilt angeordneten Aufnahmen 7 zur Aufnahme von Umlenkstücken 8 versehen. Jedes Umlenkstück umfasst einen Umlenkkanal 9 für die Rückführung der Kugeln 3 jeweils von einem Auslaufende 10 hin zu einem Einlaufende 11 mindestens einer gemeinsamen Windung 12 der Gewindebahn 4.

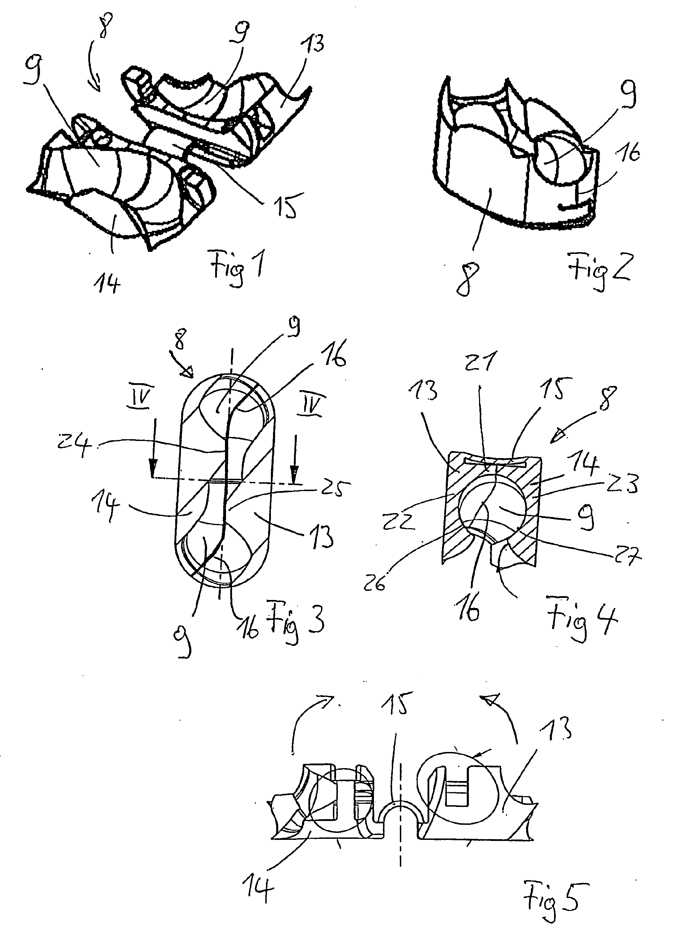

Figur 1 zeigt deutlich, dass das Umlenkstück 8 aus zwei Teilumlenkstücken 13, 14 gebildet ist, die einstückig über ein Filmscharnier 15 miteinander unverlierbar verbunden sind. Figur 5 zeigt beispielsweise deutlich die Ausbildung des Filmscharniers 15. Die in Figur 5 vorgesehenen Pfeile zeigen, wie die beiden Teilumlenkstücke 13, 14 zusammengeklappt werden, um das erfindungsgemäße Umlenkstück 8 zu bilden.
Figur 2 zeigt das zusammengeklappte erfindungsgemäße Umlenkstück 8.
Figur 3 zeigt eine Ansicht des erfindungsgemäßen Umlenkstückes 8, wobei hier deutlich eine Teilungsebene 16 in der gezeigten Darstellung etwa S-förmig längs des Umlenkkanales 9 angeordnet ist und das Umlenkstück 8 in die zwei Teilumlenkstücke 13, 14 teilt. Die Teilungsebene 16 wurde mit hervorgehobener Strichstärke dargestellt, um deren Verlauf zu verdeutlichen. Der S-förmige Verlauf ist günstig, da beide Teilumlenkstücke 13, 14 eine Teilungsebene haben, die im Spitzwerk einfach vorgesehen werden können, ohne das zu große Hinterschneidungen auftreten.
Figur 4 zeigt einem Querschnitt durch das erfindungsgemäße Umlenkstück 8, wobei hier deutlich zu erkennen ist, dass das Filmscharnier 15 nach einer Klappbewegung der beiden Teilumlenkstücke 13, 14 aufeinander zu um etwa 180° geschwenkt ist. Die Teilungsebene 16 ist so angeordnet, dass beide Teilumlenkstücke 13, 14 nebeneinander angeordnet in einer Form eines Spritzwerkzeuges hergestellt werden können, wobei keine Hinterschnitte oder jedenfalls nur solche Hinterschnitte an beiden Teilumlenkstücken 13, 14 vorgesehen sind, die mit einem einfachen Spritzwerkzeug herstellbar sind.

Der Darstellung in der Figur 6 ist zu entnehmen, dass die beiden Teilumlenkstücke 13, 14 punktsymmetrisch zu einem in der Teilungsebene 16 liegenden Symmetriepunkt P ausgebildet sind, wobei der Symmetriepunkt in einer quer auf der Teilungsebene 16 angeordneten Schnittebene S liegt. Aufgrund dieser symmetrischen Anordnung entstehen gleiche Teilumlenkstücke 13, 14. Wenn die beiden Teilumlenkstücke 13, 14 zu dem erfindungsgemäßen Umlenkstück 8 zusammengeklappt sind, entfällt eine besondere Orientierung zum Einbauen in die Aufnahme 7 der Spindelmutter 2.

Der Figur 6 ist ferner zu entnehmen, dass die beiden Teilumlenkstücke 13, 14 jeweils mit einem Haken 17 und einer Hakenaufnahme 18 versehen sind, wobei je ein Haken 17 und eine Hakenaufnahme 18 beider Teilumlenkstücke 13, 14 ineinander greifend miteinander verhakbar sind. An beiden Teilumlenkstücken 13, 14 ist an dem jeweiligen einen umfangsseitigen Ende der Haken 17 und an dem anderen gegenüberliegenden umfangsseitigen Ende die Hakenaufnahme 18 einstückig angeformt.

Figur 7 zeigt deutlich die Ausbildung des Hakens 17 und die Ausbildung der Hakenaufnahme 18 an dem einen Teilumlenkstück 13. Hier ist ersichtlich, dass Hinterschneidungen 19, 20 vorgesehen sind. Diese Hinterschneidungen 19, 20 sind für ein einwandfreies Verrasten der Haken 17 und der Hakenaufnahmen 18 miteinander vorgesehen. Diese Hinterschneidungen 19, 20 sind jedoch derart, dass einfache Spritzwerkzeuge ohne Schieber zum Einsatz kommen können. Nach Fertigstellen der beiden Teilumlenkstücke 13, 14 wird dann ein sogenanntes Zwangsentformen durchgeführt, bei dem die Teilumlenkstück 13, 14 mit ihrem Haken und mit ihren Hakenaufnahme 18 elastisch verformt werden, um ein Öffnen des Spritzwerkzeugs zu ermöglichen.

Figur 8 zeigt im Detail die beiden ineinander verrasteten Teilumlenkstücke 13, 14.

Figur 4 zeigt deutlich, dass der Umlenkkanal 9 durch einen Boden 21 und zwei Seitenborde 22, 23 des Umlenkstücks 8 begrenzt ist, wobei der eine Seitenbord 22 an dem einen Teilumlenstück 13 und der andere Seitenbord 23 an dem anderen Teilumlenkstück 14 einstückig angeformt ist.

Der Figur 3 ist zu entnehmen, dass der lichte Abstand zwischen den beiden freien Enden der Seitenborde 22, 23 deutlich kleiner ist als der Kugeldurchmesser. Diese Verengung an den freien Enden ist zurückzuführen auf Schaufeln 24, 25, und Kugelführungsflächen, die an beiden Seitenborden 22, 23 jeweils an deren der Spindel 1 zugewandten freien Enden einstückig angeformt sind. Diese Schaufeln 24, 25 sind zum Eingriff zwischen die Kugeln 3 und die Gewindenut 5 der Spindel 1 vorgesehen.

Aber auch der Figur 4 kann entnommen werden, dass Kugelführungsflächen 26, 27 an beiden Teilumlenkstücken 13, 14 ausgebildet sind, die in die Gewindenut 5 der Spindel 1 eingreifen, um die Kugel 3 von der Gewindenut 5 der Spindel 1 abzuheben.

Das erfindungsgemäße Umlenkstück lässt sich in wirtschaftlich besonders günstiger Weise aus thermoplastischen Kunststoff im Spritzverfahren herstellen.

### Positionszahlen

- 1: Spindel
- 2: Spindelmutter
- 3: Kugel
- 4: Gewindebahn
- 5: Gewindenut
- 6: Gewindenut
- 7: Aufnahme
- 8: Umlenkstück
- 9: Umlenkkanal
- 10: Auslaufende
- 11: Einlaufende
- 12: Windung
- 13: Teilumlenkstück
- 14: Teilumlenkstück
- 15: Filmscharnier
- 16: Teilungsebene
- 17: Haken
- 18: Hakenaufnahme
- 19: Hinterschneidung
- 20: Hinterschneidung
- 21: Boden
- 22: Seitenbord
- 23: Seitenbord
- 24: Schaufel
- 25: Schaufel
- 26: Kugelführungsfläche
- 27: Kugelführungsfläche

## Patentansprüche

1. Kugelgewindetrieb, mit einer auf einer Spindel (1) angeordneten Spindelmutter (2), sowie mit Kugeln (3), die in einer Gewindebahn (4) abrollbar angeordnet sind, wobei die Gewindebahn (4) durch eine an der Spindel (1) ausgebildete Gewindenut (5) und durch eine an der Spindelmutter (2) ausgebildete Gewindenut (5) gebildet ist, und mit wenigstens einem in einer Aufnahme (7) der Spindelmutter (2) angeordneten Umlenkstück (8), welches einen Umlenkkanal (9) für die Rückführung der Kugeln (3) jeweils von einem Auslaufende (10) hin zu einem Einlaufende einer gemeinsamen Windung (12) der Gewindebahn (4) aufweist, **dadurch gekennzeichnet, daß** das Umlenkstück (8) aus zwei Teilumlenkstücken (13, 14) zusammengesetzt ist, wobei eine Teilungsebene den Umlenkkanal (9) längs teilt, wobei der Umlenkkanal (9) durch einen Bonden.(21) und zwei Seitenborde (22, 23) des Umlenkstücks (8) begrenzt ist und wobei der eine Seitenbord (22) an dem einen Teilumlenkstück (13) und der andere Seitenbord (23) an dem anderen Teilumlenkstück (14) ausgebildet ist, und wobei der lichte Abstand zwischen den beiden freien Enden der Seitenborde (22, 23) kleiner als der Kugeldurchmesser ausgeführt ist.

2. Kugelgewindetrieb nach Anspruch 1, bei dem beide Teilumlenkstücke (13, 14) insbesondere durch ein Filmscharnier (15) unverlierbar miteinander verbunden sind.

3. Kugelgewindetrieb nach Anspruch 1, bei dem die beiden Teilumlenkstücke (13, 14) in einer quer zur Teilungsebene angeordneten Schnittebene punktsymmetrisch zu einem in der Teilungsebene liegenden Symmetriepunkt ausgebildet sind.

4. Kugelgewindetrieb nach Anspruch 1, bei dem beide Seitenborde (22, 23) jeweils an ihrem der Gewindenut (5) der Spindel zugewandten freien Ende mit einer Schaufel (24. 25) zum Eingriff zwischen die Kugel (3) und die Gewindenut (5) der Spindel (1) versehen sind.

5. Kugelgewindetrieb nach Anspruch 1, bei dem das Umlenkstück (8) mit Kugelführungsflächen (26, 27) in die Gewindenut (5) der Spindel (1) eingreift, um die Kugeln (3) von der Gewindenut (5) der Spindel (1) abzuheben.

6. Kugelgewindetrieb nach Anspruch 1, bei dem beide Teilumlenkstücke (13, 14) jeweils mit einem Haken (17) und mit einer Hakenaufnahme (18) versehen ist, wobei je ein Haken (17) und eine Hakenaufnahme (18) beider Teilumlenkstücke (13, 14) ineinandergreifend miteinander verhakbar sind.

7. Kugelgewindetrieb nach den Ansprüchen 3 und 6, bei dem an dem einen umfangsseitigen Ende jedes Teilumlenkstückes (13. 14) der Haken (17) und an dem gegegenüberliegenden anderen umfangsseitigen Ende die Hakenaufnahme (18) vorgesehen sind.

8. Kugelgewindetrieb nach Anspruch 1, bei dem das Umlenkstück aus insbesondere thermoplastischen Kunststoff im Spritzgießverfahren hergestellt ist.

## Claims

1. Ball screw with a spindle nut (2) arranged on a spindle (1), and also with balls (3), which are arranged in such a way that they can roll in a thread path (4), the thread path (4) being formed by a thread groove (5) formed on the spindle (1) and by a thread groove (5) formed on the spindle nut (2), and with at least one deflecting piece (8), which is arranged in a receptacle (7) of the spindle nut (2) and has a deflecting channel (9) for the return of the balls (3) respectively from a run-out end (10) to a run-in end (11) of a common turn (12) of the thread path (4), **characterized in that** the deflecting piece (8) is composed of two partial deflecting pieces (13, 14), a parting plane dividing the deflecting channel (9) longitudinally the deflecting channel (9) being bounded by a base (21) and two side plates (22, 23) of the deflecting piece (8) and the one side plate (22) being formed on the one partial deflecting piece (13) and the other side plate (23) being formed on the other partial deflecting piece (14) and the clear distance between the two free ends of the side plates (22, 23) being less than the ball diameter.

2. Ball screw according to Claim 1, in which the two partial deflecting pieces (13, 14) are captively connected to one another, in particular by a film hinge.

3. Ball screw according to Claim 1, in which the two partial deflecting pieces (13, 14) are formed point-symmetrically in a sectional plane arranged transversely to the parting plane, with respect to a point of symmetry lying in the parting plane.

4. Ball screw according to Claim 1, in which both side plates (22, 23) are respectively provided at their free end, facing the thread groove (5) of the spindle, with a blade (24, 25) for engagement between the ball (3) and the thread groove (5) of the spindle (1).

5. Ball screw according to Claim 1, in which the deflecting piece (8) engages with ball guiding surfaces (26, 27) in the thread groove (5) of the spindle (1), in order to lift the balls (3) off from the thread groove (5) of the spindle (1).

6. Ball screw according to Claim 1, in which both partial deflecting pieces (13, 14) are respectively provided with a hook (17) and with a hook receptacle (18), a hook (17) and a hook receptacle (18) of each of the two partial deflecting pieces (13, 14) being able to hook in one another, gripping one another.

7. Ball screw according to Claims 3 and 6, in which the hook (17) is provided at the one circumferential end of each partial deflecting piece (13, 14) and the hook receptacle (18) is provided at the opposite, other circumferential end.

8. Ball screw according to Claim 1, in which the deflecting piece is produced in particular from thermoplastic material by the injection-molding process.

## Revendications

1. Vis à billes, comprenant un écrou de broche (2) disposé sur une broche (1), ainsi que des billes (3) qui sont disposées de manière à pouvoir rouler dans une piste filetée (4), la piste filetée (4) étant formée par une rainure filetée (5) réalisée sur la broche (1) et par une rainure filetée (5) réalisée sur l'écrou de broche (2), et au moins une pièce de renvoi (8) disposée dans un logement (7) de l'écrou de broche (2), qui présente un canal de renvoi (9) pour le retour des billes (3) à chaque fois depuis une extrémité de sortie (10) jusqu'à une extrémité d'entrée d'un enroulement commun (12) de la piste filetée (4), **caractérisée en ce que** la pièce de renvoi (8) se compose de deux pièces de renvoi partielles (13, 14), un plan de séparation divisant le canal de renvoi (9) en longueur, le canal de renvoi (9) étant limité par un fond (21) et deux bords latéraux (22, 23) de la pièce de renvoi (8) et l'un des bords latéraux (22) étant réalisé sur l'une des pièces de renvoi partielles (13) et l'autre bord latéral (23) étant réalisé sur l'autre pièce de renvoi partielle (14), et la distance intérieure entre les deux extrémités libres des bords latéraux (22, 23) étant inférieure au diamètre des billes.

2. Vis à billes selon la revendication 1, dans laquelle les deux pièces de renvoi partielles (13, 14) sont connectées l'une à l'autre de manière imperdable notamment par une charnière à film (15) .

3. Vis à billes selon la revendication 1, dans laquelle les deux pièces de renvoi partielles (13, 14) sont réalisées dans un plan de coupe disposé transversalement au plan de séparation suivant une symétrie ponctuelle par rapport à un point de symétrie situé dans le plan de séparation.

4. Vis à billes selon la revendication 1, dans laquelle les deux bords latéraux (22, 23) sont pourvus à chaque fois sur leur extrémité libre tournée vers la rainure filetée (5) de la broche d'une pale (24, 25) pour l'engagement entre les billes (3) et la rainure filetée (5) de la broche (1).

5. Vis à billes selon la revendication 1, dans laquelle la pièce de renvoi (8) vient en prise avec des surfaces de guidage de billes (26, 27) dans la rainure filetée (5) de la broche (1), afin de soulever les billes (3) de la rainure filetée (5) de la broche (1).

6. Vis à billes selon la revendication 1, dans laquelle les deux pièces de renvoi partielles (13, 14) sont à chaque fois pourvues d'un crochet (17) et d'un logement de crochet (18), un crochet (17) respectif et un logement de crochet (18) des deux pièces de renvoi partielles (13, 14) pouvant être accrochés l'un dans l'autre par engagement mutuel.

7. Vis à billes selon les revendications 3 et 6, dans laquelle sur l'une des extrémités du côté périphérique de chaque pièce de renvoi partielle (13, 14) est prévu le crochet (17), et sur l'autre extrémité opposée du côté périphérique est prévu le logement de crochet (18).

8. Vis à billes selon la revendication 1, dans laquelle la pièce de renvoi est fabriquée dans un procédé de moulage par injection en plastique notamment thermoplastique.
